(19) Europäisches Patentamt / European Patent Office / Office européen des brevets

(11) **EP 2 306 564 B1**

## (12) EUROPEAN PATENT SPECIFICATION

(45) Date of publication and mention
of the grant of the patent:
**03.07.2019 Bulletin 2019/27**

(51) Int Cl.:
*H01M 4/66* (2006.01)    *H01M 4/75* (2006.01)
*H01M 6/06* (2006.01)    *H01M 6/08* (2006.01)

(21) Application number: **10170776.8**

(22) Date of filing: **26.07.2010**

(54) **Alkaline dry battery and method for producing the same**

Alkali-Trockenbatterie und Herstellungsverfahren dafür

Batterie sèche alcaline et son procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.10.2009 JP 2009229672**

(43) Date of publication of application:
**06.04.2011 Bulletin 2011/14**

(73) Proprietor: **Panasonic Intellectual Property
Management Co., Ltd.
Osaka-shi, Osaka 540-6207 (JP)**

(72) Inventor: **Kato, Susumu
1-61 Shiromi 2-chome,
Chuo-ku,
Osaka-shi, Osaka 540-6207 (JP)**

(74) Representative: **TBK
Bavariaring 4-6
80336 München (DE)**

(56) References cited:
**EP-A1- 1 729 362**     **EP-A1- 1 981 105**
**WO-A1-2006/087388**     **JP-A- 5 129 016**
**JP-A- 5 343 072**     **JP-A- 63 037 568**

## Description

FIELD OF THE INVENTION

The present invention relates to an alkaline dry battery, which is a primary battery, and particularly relates to an improvement of a negative electrode current collector of an alkaline dry battery.

BACKGROUND OF THE INVENTION

Conventionally, alkaline dry batteries have been widely used as the power source for electronic devices such as portable devices. An alkaline dry battery includes a hollow cylindrical positive electrode mixture including a positive electrode active material, a gelled negative electrode filled into the hollow of the positive electrode mixture and including a negative electrode active material, a separator disposed between the positive electrode mixture and the gelled negative electrode, a negative electrode current collector inserted into the gelled negative electrode, and a negative electrode terminal plate electrically connected to the negative electrode current collector. For the negative electrode current collector, brass mainly composed of copper is used.

When an alkaline dry battery is in an overdischarged state, hydrogen gas is generated in the battery, thus possibly causing leaking of the electrolyte (hereinafter, referred to as "electrolyte leakage") as the battery internal pressure increases. The leaching of the constituent elements of the negative electrode current collector into the electrolyte is considered to be involved in the mechanism of the hydrogen gas generation. Therefore, various studies on the negative electrode current collectors of alkaline dry batteries have been carried out.

For example, Japanese Laid-Open Patent Publication No. Hei 5-13085 proposes plating the surface of brass with at least one metal selected from the group consisting of zinc, tin, and lead in order to inhibit the hydrogen gas generation from the negative electrode current collector. This can inhibit the hydrogen gas generation from the negative electrode current collector.

Japanese Laid-Open Patent Publication No. 2006-172908 proposes the formation of a tin-plated layer having a thickness of 0.05 to 0.5 $\mu$m on the surface of brass. This can inhibit electrolyte leakage during overdischarge.

It is known that, when an assembled battery including a plurality of alkaline dry batteries connected in series is in an overdischarged state, the polarity reversal in at least one of the batteries constituting the assembled battery occurs inevitably. For example, the polarity reversal in a battery having a smaller electric capacity may occur. Even in the case where the batteries have the same electric capacity, the batteries will not have exactly the same discharge voltage profile owing to differences in the internal resistance and in the active material surface area, and the polarity reversal in a battery having a lower discharge voltage occurs. In a battery with a reversed polarity, copper and zinc will be leached from the brass constituting the current collector. This results in a decrease in the hydrogen overvoltage of zinc and an increase in the amount of hydrogen gas generated, thus causing electrolyte leakage. Such electrolyte leakage tends to occur especially when the discharge circuit of an assembled battery including a battery with a reversed polarity is opened. The proposals made by Japanese Laid-Open Patent Publication No. Hei 5-13085 and Japanese Laid-Open Patent Publication No. 2006-172908 are not sufficient to prevent such electrolyte leakage.

Further, JP 63 037568 A discloses a cylindrical positive electrode black mix which is mixed and molded with manganese dioxide and carbon is arranged in a bottomed cylindrical positive electrode can, and the inner space of a separator is filled with gelatinous negative electrode zinc mainly made of amalgamated granular zinc and added with an alkaline electrolyte and a gelling agent and kneaded.

EP 1981105 A1 discloses an alkaline dry battery including: a cylindrical positive electrode mixture having a hollow and including at least one of manganese dioxide powder and nickel oxyhydroxide powder; a gelled negative electrode including zinc alloy powder; a separator interposed between the positive electrode mixture and the gelled negative electrode; a negative electrode current collector inserted into the gelled negative electrode; and a negative electrode terminal plate electrically connected to the negative electrode current collector. The gelled negative electrode is filled in the hollow of the positive electrode mixture with the separator interposed therebetween.

WO 2006/087388 A1 discloses a zinc alloy powder for use in an alkaline battery, the alloy consisting essentially of aluminium, bismuth, indium, magnesium, strontium and optionally lead, besides the unavoidable impurities in the aforementioned metals.

Therefore, in order to solve the above-described problem, it is an object of the present invention to provide a highly reliable alkaline dry battery with reduced gas generation during overdischarge, and a method for producing the same.

BRIEF SUMMARY OF THE INVENTION

According to one aspect of the present invention, there is provided an alkaline dry battery including:

a hollow cylindrical positive electrode mixture including a positive electrode active material; a gelled negative electrode filled into the hollow of the positive electrode mixture and including a negative electrode active material; a separator disposed between the positive electrode mixture and the gelled negative electrode; a negative electrode current collector inserted into the gelled negative electrode; a negative electrode terminal plate electrically connected to the negative electrode current collector; and an electrolyte, wherein the negative electrode current collector includes brass having an average crystal particle size in the range of 0.015 mm to 0.054 mm, wherein the brass has a zinc content of 30 to 40 wt%.

According to another aspect of the present invention, there is provided a method for producing an alkaline dry battery induding a hollow cylindrical positive electrode mixture including a positive electrode active material; a gelled negative electrode filled into the hollow of the positive electrode mixture and including a negative electrode active material; a separator disposed between the positive electrode mixture and the gelled negative electrode; a negative electrode current collector inserted into the gelled negative electrode; a negative electrode terminal plate electrically connected to the negative electrode current collector; and an electrolyte, the method including the steps of:

(1) providing a nail-shaped molded article including brass;
(2) heating the molded article to 300 to 400°C; and
(3) cooling, after the step (2), the molded article at a rate of 10°C/sec or less to obtain a negative electrode current collector in which the brass has an average crystal particle size of 0.015 mm or greater, wherein the brass has a zinc content of 30 to 40 wt%.

The present invention can provide a highly reliable alkaline dry battery with reduced gas generation during overdischarge. For example, even if a polarity reversal has occurred in a battery having a smaller capacity included in an assembled battery including serially connected a plurality of alkaline dry batteries having various capacities, the gas generation in the battery with a reversed polarity is inhibited, which improves the electrolyte leakage resistance of the battery.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE DRAWING

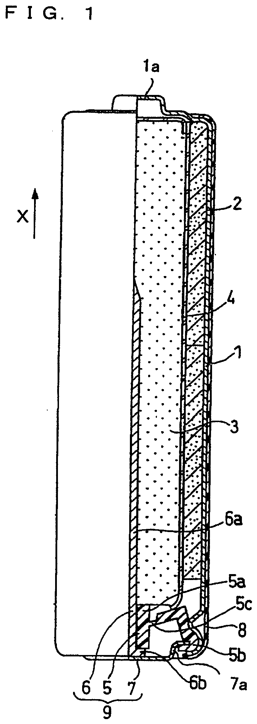

FIG 1 is a front view, partly in cross section, of a AA-size alkaline dry battery according to one embodiment of the present invention.

DETAILED DESCRIPTION OF THE INVENTION

First, a description is given of the mechanism of the leaching of brass constituting a negative electrode current collector during overdischarge of an alkaline dry battery and the gas generation associated therewith.

The reactions according to the following formulae (1) and (2) proceed at the beginning of discharge of an alkaline dry battery. The reduction reaction of manganese dioxide proceeds in the positive electrode. Zinc is dissolved in the negative electrode, and the generated zinc oxide is precipitated on the surface of zinc.

$$\text{Positive electrode: } MnO_2 + H^+ + e^- \rightarrow MnOOH \qquad (1)$$

$$\text{Negative electrode: } Zn + 40H^- \rightarrow Zn(OH)_4{}^{2-} + 2e^-$$

$$Zn(OH)_4{}^{2-} \rightarrow ZnO + H_2O + 2OH^- \quad (2)$$

At the end of discharge of the alkaline dry battery, the water content of the negative electrode is decreased, and the supply of $OH^-$ to zinc become insufficient, resulting in a reduction in the $OH^-$ concentration in the vicinity of the zinc surface. This makes zinc locally acidic in the vicinity of the zinc surface, and zinc is thus passivated. Consequently, the potential of the negative electrode abruptly increases, and the battery voltage abruptly decreases. When the load is constant, the current value also abruptly decreases.

In the following, an example is given in which an assembled battery including a plurality of alkaline dry batteries connected in series is discharged.

When a resistor is connected to an assembled battery including two batteries, namely, batteries A and B, connected in series, and the circuit is dosed, the assembled battery discharges. If the capacity of battery A is smaller than that of battery B, the passivation of zinc occurs earlier in battery A than in battery B. Accordingly, battery A experiences a rapid voltage decrease and enters into an end-of-discharge state. When the discharge of the assembled battery further proceeds, the voltage of battery A takes a negative value (a value less than 0 V), indicating a polarity reversal.

In the case of continuing the discharge of the assembled battery, it is necessary to extract electrons from the negative electrode for battery A with a reversed polarity, despite the fact that zinc has been passivated. To supply these electrons, a metal is leached from the negative electrode current collector as ions. For example, when the negative electrode current collector is made of brass having a tin-plated layer formed thereon, a metal such as zinc precipitated on the negative electrode current collector surface (the metal leached from the active material), tin, the zinc contained in the brass, and the copper contained in the brass are leached in this order. The copper and zinc constituting the brass make up the majority of the metals leached from the negative electrode current collector.

When the discharge circuit including battery A with a reversed polarity is opened, the passivation of zinc is eliminated, and the potential of the negative electrode decreases, approaching the original potential of zinc. At this time, the potential of the negative electrode falls below the potential at which hydrogen gas is generated, resulting in a state where hydrogen gas is likely to be generated.

Metals, such as copper, leached during the polarity reversal causes a decrease in the hydrogen overvoltage of zinc. This increases the rate of hydrogen generation and hence the amount of hydrogen gas generated, thus increasing the internal pressure of the battery. When the internal pressure of the battery exceeds a predetermined value, a designated safety valve breaks, causing electrolyte leakage.

As described above, the leaching of metal from the negative electrode current collector in an assembled battery inevitably occurs even in the case where a plated layer is formed on the negative electrode current collector, and causes deterioration of the electrolyte leakage resistance. Meanwhile, the leaching of metal from the negative electrode current collector seems to occur at the grain boundaries between the crystal grains of brass constituting the negative electrode current collector. It is therefore believed that the absolute quantity of metal ions leached can be reduced by decreasing the area of the grain boundaries.

Therefore, the inventors have conducted an intensive study as to how to increase the average crystal particle size of the brass constituting the negative electrode current collector. As a result, they have found that it is effective to use brass having an average crystal particle size of 0.015 mm or greater to inhibit the leaching of metal during overdischarge.

One embodiment of the alkaline dry battery according to the present invention is described with reference to FIG 1. FIG 1 is a front view, partly in cross section, of a AA-size alkaline dry battery (LR6). Arrow X in FIG 1 indicates the axial direction of the battery (positive electrode mixture).

In a cylindrical battery case 1 having a bottom, a hollow cylindrical positive electrode mixture 2 is housed. The positive electrode mixture 2 is in close contact with the inner surface of the battery case 1, and in electrical contact with the battery case also serving as a positive electrode current collector. A graphite coating layer is formed on the inner surface of the battery case 1 in order to reduce the contact resistance with the positive electrode mixture. The battery case 1 has a convexed positive electrode terminal 1a provided at the bottom. The battery case 1 can be obtained, for example, by pressing a nickel-plated steel plate into predetermined dimensions and shape.

A gelled negative electrode 3 is filled into the hollow of the positive electrode mixture 2 with a cylindrical separator 4 having a bottom interposed between the positive electrode mixture 2 and the gelled negative electrode 3. The separator 4 may be, for example, non-woven fabric composed mainly of polyvinyl alcohol fiber and rayon fiber.

The opening of the battery case 1 is sealed with a sealing unit 9. The sealing unit 9 includes a nail-shaped negative electrode current collector 6, a resin gasket 5 having a safety valve, and a negative electrode terminal plate 7 electrically in contact with the negative electrode current collector 6.

The negative electrode terminal plate 7 has a central flat part and a brim around the flat part. The negative electrode terminal plate 7 also has vent holes 7a at the boundary between the brim and the flat part for releasing the gas contained in the battery to the outside. The negative electrode terminal plate 7 can be obtained, for example, by pressing a nickel-plated steel plate or a tin-plated steel plate into predetermined dimensions and shape.

The negative electrode current collector 6 has a substantially cylindrical body 6a and a head 6b provided at one end of the body 6a. The head 6b of the negative electrode current collector is welded to the flat part of the negative electrode terminal plate 7.

The body 6a of the negative electrode current collector 6 is inserted a predetermined length into the center of the gelled negative electrode 3 so that its axial direction is substantially parallel to direction X. The cross section, perpendicular to direction X, of the body 6a is substantially circular.

The negative electrode current collector 6 includes brass having an average crystal particle size in the range of 0.015 mm to 0.054 mm. The area of the grain boundaries, that is, the reaction area of the brass (the area where the leaching of metal occurs) is reduced by increasing the average crystal particle size of the brass to 0.015 mm or greater. Accordingly, the leaching of the brass into the electrolyte during overdischarge can be inhibited. This inhibits the reduction of the hydrogen overvoltage of zinc caused by the leaching of brass, thus improving the electrolyte leakage resistance of the battery.

Furthermore, the negative electrode current collector has a significantly improved flexibility when the average crystal particle size of the brass is 0.015 mm or greater. Therefore, even if the negative electrode current collector is slightly bent at the time of press-fitting the negative electrode current collector into the through-hole of the gasket during the production of the sealing unit, such a bend can be corrected. This leads to an improved productivity.

Conventional negative electrode current collectors have poor flexibility. Therefore, when the negative electrode current collectors are slightly bent at the time of press-fitting the negative electrode current collector into the through-hole of the gasket, there may be a case where the pressure of the gasket cannot correct such a bend, and the negative electrode current collector cannot be inserted into the through-hole of the gasket. Assembling a battery that has a bend in the negative electrode current collector may cause malfunctions such as sealing defects and insufficient current collection.

To improve the productivity and the electrolyte leakage resistance of the battery during overdischarge, the average crystal particle size of the brass is preferably 0.030 mm or greater, more preferably 0.045 mm or greater. The average crystal particle size of the brass is in the range of 0.015 mm to 0.054 mm.

The average crystal particle size of the brass can be determined, for example, in the following manner.

A cross-sectional image, perpendicular to the axial direction X, of the body 6a is obtained using a polarizing microscope or the like. A region extending to a predetermined depth from the surface (for example, a depth of 0.03 to 0.2 mm from the surface) is set, and a line segment having a predetermined length P (for example, 50 to 100 $\mu$m) is drawn at an arbitrary position in that region. The number Q of the crystal grains completely divided by this line segment is determined. Then, the crystal particle size R is determined using the following equation.

$$\text{Crystal Particle Size R} = \text{Length P of Line Segment/Number Q of Crystal Grains}$$

This operation is repeated plural times (for example, 5 to 10 times), and the crystal particle size R is determined for each operation. The average value is regarded as an average crystal particle size.

Brass is an alloy containing copper and zinc. In addition, brass can further contain at least one selected from the group consisting of tin, phosphorus, and aluminum. Preferably, the proportion of elements contained in the brass other than copper and zinc is 0.05 to 3 wt%.

In terms of the current collection capability and strength, the brass contains 30 to 40 wt% of zinc. When the zinc content of the brass is less than 30 wt%, the brass has a reduced mechanical strength, and the negative electrode current collector becomes too easy to be bent, resulting in a reduced productivity and an increased cost. When the zinc content of the brass exceeds 40 wt%, the brass becomes brittle, reducing the processability.

In terms of the current collection capability and strength, in the case of the AA-size battery, it is preferable that the body 6a has a diameter of 0.95 to 1.35 mm. When the diameter of the body 6a is 1.35 mm or less, the area of contact with the gelled negative electrode (electrolyte) of the negative electrode current collector is decreased, which significantly reduces the gas generation from the negative electrode current collector. When the diameter of the body 6a is less than 0.95 mm, the mechanical strength is reduced and therefore the negative electrode current collector becomes too easy to be bent, resulting in a reduced productivity.

"Length of the portion of body 6a inserted into gelled negative eledrode"/"Total length of body 6a" is preferably 0.72 to 0.86. Preferably, "Length of the portion of body 6a inserted into gelled negative electrode"/"Height of gelled negative electrode filled" is 0.72 to 0.86. This enables the gelled negative electrode 3 and the negative electrode current collector 6 to be sufficiently in contact with each other at the portion of the negative electrode current collector 6 inserted into the gelled negative electrode 3, thus achieving a good current collection effect.

According to the alkaline dry battery of the present invention, the negative electrode current collector can be produced in the following manner. That is, the method for producing an alkaline dry battery according to claim 9 includes the steps of:

(1) providing a nail-shaped molded article including brass;
(2) heating the molded article to 300 to 400°C; and
(3) cooling, after the step (2), the molded article at a rate of 10°C/sec or less to obtain a negative electrode current collector in which the brass has an average crystal particle size of 0.015 mm or greater.

In step (1), the nail-shaped molded article is obtained, for example, by pressing a brass wire rod into the shape of a nail of predetermined dimensions by an ordinary method.

Preferably, steps (2) and (3) are carried out in a nonoxidizing atmosphere (for example, an inert gas atmosphere such as argon). In step (2), the molded article is heated to 300°C or higher in order to recrystallize the brass. When the heating temperature in step (2) is higher than 400°C, the molded article may be deformed. In terms of the effect of heating the brass and the productivity of the negative electrode current collector, the heating time in step (2) is preferably 5 to 20 minutes. In step (2), the molded article may be heated using a heating furnace.

Adjusting the cooling rate after heating in step (3) enables easy control of the average crystal particle size of the brass. In step (3), the molded article is gradually cooled, with the temperature decrease being controlled within 10°C per second.

In terms of productivity, the cooling rate in step (3) is preferably 0.5°C/sec or greater. The cooling rate in step (3) is more preferably 0.5 to 3.3°C/sec, particularly preferably 0.5 to 1.7°C/sec.

To inhibit the leaching of brass into the electrolyte, it is preferable that the method includes, after step (3), step (4) of forming a protective layer including at least one selected from the group consisting of tin, indium, and bismuth on the surface of the negative electrode current collector. The protective layer is less likely to be ionized than brass, and therefore has the effect of inhibiting the corrosion of the negative electrode current collector. The effect of the protective layer in inhibiting the corrosion of the negative electrode current collector is exhibited particularly during a long-term storage of the battery. Preferably, the protective layer is formed by plating.

Preferably, the protective layer has a thickness of 0.03 to 2 $\mu$m. When the thickness of the protective layer is less than 0.03 $\mu$m, the effect of the protective layer in inhibiting the corrosion of the negative electrode current collector may be decreased. When the protective layer contains tin and the thickness of the protective layer is greater than 2 $\mu$m, tin is excessively leached during overdischarge, which in turn decreases the hydrogen overvoltage of zinc and promotes the generation of hydrogen gas. When the protective layer contains at least one of indium and bismuth and the thickness of the protective layer is greater than 2 $\mu$m, it is difficult to reduce the cost.

The gasket 5 is composed of a central cylindrical part 5a, an outer peripheral cylindrical part 5b, and a connecting part connecting the central cylindrical part 5a and the outer peripheral cylindrical part 5b. The body 6a of the negative electrode current collector 6 is press-fitted into the through-hole of the central cylindrical part 5a.

The connecting part includes a thinned section 5c serving as a designated safety valve. In the event that the internal pressure of the battery rises to an abnormal level, the thinned section 5c formed in the connecting part of the gasket 5 breaks so that the gas can be released from the vent holes 7a of the negative electrode terminal plate 7.

The gasket 5 can be obtained, for example, by injection-molding nylon or polypropylene into predetermined dimensions and shape.

The edge of the opening of the battery case 1 is crimped onto the peripheral edge (brim) of the negative electrode terminal plate 7 with the outer peripheral cylindrical part 5b of the gasket 5 interposed therebetween. Thus, the opening of the battery case 1 is sealed. The outer surface of the battery case 1 is covered with an exterior label 8.

The positive electrode mixture 2, the separator 4, and the gelled negative electrode 3 contain an alkaline electrolyte. The alkaline electrolyte may be, for example, an aqueous potassium hydroxide solution. The potassium hydroxide concentration in the electrolyte is preferably 30 to 40 wt%. The electrolyte may further contain zinc oxide. The zinc oxide concentration in the electrolyte is preferably 1 to 3 wt%.

The positive electrode mixture 2 includes at least one of manganese dioxide and nickel oxyhydroxide as the positive electrode active material. The positive electrode mixture 2 may be composed of, for example, a mixture of a positive electrode active material, a conductive agent, and an alkaline electrolyte. Graphite powder can be used as the conductive agent.

The gelled negative electrode 3 includes zinc or a zinc alloy as the negative electrode active material. The gelled negative electrode 3 may be composed of, for example, a gelled electrolyte formed by adding a gelling agent to an alkaline electrolyte, and a powdered negative electrode active material dispersed in the gelled electrolyte. For example, sodium polyacrylate can be used for the gelling agent.

To improve the corrosion resistance of the gelled negative electrode 3, it is preferable that the zinc alloy contains 150 to 500 ppm of Al. Al is present on the surface of the active material particles and therefore the active material particles become passivated during overdischarge, thus delaying the dissolution of zinc. When the Al content of the zinc alloy is less than 150 ppm, it is not possible to achieve a sufficient improvement in the corrosion resistance of the gelled negative electrode 3. When the Al content of the zinc alloy is greater than 500 ppm, Al may be precipitated on the separator during discharge, thus causing a micro-short circuit.

To improve the corrosion resistance of the gelled negative electrode, it is more preferable that the zinc alloy contains 50 to 500 ppm of indium, 30 to 200 ppm of bismuth, and 150 to 500 ppm of aluminum.

The ratio of capacity Cn of the gelled negative electrode to capacity Cp of the positive electrode mixture (hereinafter, Cn/Cp) is preferably 0.95 to 1.10. The capacity as used herein refers to a theoretical capacity calculated based on the amount of the active material.

The lower the ratio Cn/Cp, the greater the improvement in the utilization of the negative electrode active material during discharge, the smaller the amount of unreacted zinc at the end of discharge, and the smaller the amount of gas generated from the gelled negative electrode. To achieve a significant reduction of the gas generation from the gelled negative electrode, Cn/Cp is 1.10 or less, preferably as small as possible. However, when Cn/Cp is less than 0.95, the utilization of the positive electrode active material may be too low, resulting in a reduced discharge performance.

EXAMPLES

The present invention will be described below in detail by way of examples, but the invention is not to be construed as being limited to these examples.

<<Examples 1 to 9 and Comparative Examples 1 and 2>>

AAA-size alkaline dry battery (LR6) as illustrated in FIG. 1 was produced in the following manner.

(1) Production of negative electrode current collector

A brass wire rod containing 65 wt% of copper and 35 wt% of zinc (manufactured by SAN-ETSU METALS Co., Ltd.) was pressed to obtain a nail-shaped molded article (total length: 38.0 mm, body diameter: 1.15 mm).
The obtained molded article was heated in a non-oxidizing atmosphere at 300°C for 10 minutes. Thereafter, the molded article was gradually cooled to 25°C. At this time, the value of the cooling rate of the molded article was changed to the values shown in Table 1. Thus, negative electrode current collectors having various average crystal particle sizes were obtained.
Thereafter, a tin layer (thickness: 1.5 $\mu$m) was formed on the surface of each of the negative electrode current collectors by plating.

[Measurement of average crystal particle size of negative electrode current collector]

(a) Pretreatment

After the negative electrode current collector was enclosed with uncured epoxy resin, the epoxy resin was cured to embed the negative electrode current collector in the cured epoxy resin. Together with the cured epoxy resin, the body of the negative electrode current collector was cut in a direction perpendicular to the axial direction thereof. The cut surface was polished with polishing paper and a buff to a mirror-smooth state.
The cut surface of the negative electrode current collector exposed from the cured product was subjected to a chemical treatment by being immersed in an etchant for about 10 seconds, and thereafter sufficiently washed with water. A mixture containing an aqueous ammonia solution (concentration: 29 wt%), water, and an aqueous hydrogen peroxide solution (concentration: 33 wt%) in a weight ratio of 1:1:0.02 was used as the etchant. Thereafter, the cut surface was dried to remove water.

(b) Measurement of average crystal particle size

An image of the cut surface of the negative electrode current collector was obtained using a polarizing microscope (Metaphont, manufactured by NIKON CORPORATION).
A line segment having a length of 0.1 mm was drawn at an arbitral position in a predetermined region of the cut surface. The predetermined region was a region extending from the surface of the negative electrode current collector to a depth of 0.2 mm, that is, a 0.2 mm-wide ring-shaped region extending from the outermost circumference toward the inner circumference of the cut surface. The number of the crystal grains completely divided by this line segment was counted. The value (0.1 mm/number of crystal grains) was determined as a particle size. The above-described operation was repeated five times, and the average value was regarded as an average crystal particle size.

(2) Production of positive electrode pellets

Manganese dioxide powder (average particle diameter: 35 $\mu$m) and graphite powder (average particle diameter: 10 $\mu$m) were mixed in a weight ratio of 92.8:6.2. Then, this mixture and an alkaline electrolyte were mixed in a weight ratio of 99:1, sufficiently stirred, and compression-molded into a granulated mixture in a flake form. An aqueous potassium hydroxide solution (KOH concentration: 35 wt%, ZnO concentration: 2 wt%) was used as the alkaline electrolyte for producing the positive electrode pellets.
Subsequently, the granulated mixture in a flake form was pulverized into granules, which were then classified with a sieve. The classified granules having a 10 to 100 mesh size were molded under pressure into a hollow cylindrical shape to obtain positive electrode mixture pellets.

(3) Preparation of gelled negative electrode

Zinc alloy powder (average particle diameter: 170 $\mu$m) serving as a negative electrode active material, an alkaline electrolyte as described above, and sodium polyacrylate powder serving as a gelling agent were mixed in a weight ratio of 63.9:35.4:0.7 to obtain a gelled negative electrode 3. A zinc alloy containing 50 ppm of Al, 150 ppm of Bi, and 200 ppm of In was used as the zinc alloy.

(4) Production of sealing unit

6,12-Nylon was injection-molded into predetermined dimensions and shape to obtain a gasket 5. A nickel-plated steel plate (thickness: 0.4 mm) was pressed into predetermined dimensions and shape to obtain a negative electrode terminal plate 7. The head 6b of the negative electrode current collector 6 was electrically welded to the central flat part of the negative electrode terminal plate 7, and the body 6a of the negative electrode current collector 6 was press-fitted into the central through-hole of the gasket 5, thereby producing a sealing unit 9.

(4) Assembly of alkaline dry battery

Two positive electrode pellets were placed in the battery case 1, and the positive electrode pellets were pressed with a compressing tool so that they are in close contact with the inner wall of the battery case 1, thereby yielding a positive electrode mixture 2 (weight: 10.4 g). A cylindrical separator 4 (thickness: 250 $\mu$m) having a bottom was disposed inside the positive electrode mixture 2. An alkaline electrolyte as described above (1.45 g) was injected into the separator 4.
After a predetermined time, the gelled negative electrode 3 (weight: 6.00 g) was filled into the hollow of the positive electrode mixture 2 with the separator 4 interposed between the positive electrode mixture 2 and the gelled negative electrode 3. The separator 4 was a non-woven fabric composed mainly of polyvinyl alcohol fiber and rayon fiber. The opening of the battery case 1 was sealed with the sealing unit 9, and the outer surface of the battery case 1 was covered with the exterior label 8.
Capacity Cp of the positive electrode mixture 2 was 2.741 Ah, and capacity Cn of the gelled negative electrode 3 was 3.134 Ah. That is, Cn/Cp was 1.14.

[Evaluation]

(1) Assembly test of sealing unit

45000 negative electrode current collectors of each kind were provided. Sealing units were assembled using these negative electrode current collectors. At this time, the number of the negative electrode current collectors whose tip was not inserted into the through-hole of the gasket and whose body was bent when being press-fitted into the gasket during the assembly of a sealing unit was counted. Thus, the incidence of defects during the assembly of the sealing units was determined. The above-described defect occurs when the tip of the negative electrode current collector is slightly bent by contacting with the periphery of the through-hole of the gasket, and the body of the negative electrode current collector is pushed against the gasket without the slight bend being corrected.

(2) Measurement of amount of gas generated during overdischarge

Two batteries produced in the above-described manner were provided. A 10 $\Omega$ resistor was connected to an assembled battery formed by connecting the two batteries in series, and the assembled battery was discharged under a 20°C environment. The closed-circuit voltage of each of the batteries during discharge was monitored. After three days, the resistor was removed. The batteries with a reversed polarity were removed and stored in a constant-temperature bath at 45°C for one week. The amount of gas generated during the storage was measured by water replacement method.
The evaluation results are shown in Table 1.

[Table 1]

| | Current collector | | Cooling rate of current collector (°C/sec) | Amount of gas generated during overdischarge (ml) | Incidence of defects during assembly of sealing unit |
|---|---|---|---|---|---|
| | Average crystal particle size (mm) | Body diameter (mm) | | | |
| Com. Ex. 1 | 0.006 | 1.15 | 42.2 | 13.7 | 5/45000 |
| Com. Ex. 2 | 0.011 | 1.15 | 17.7 | 11.3 | 5/45000 |
| Example 1 | 0.015 | 1.15 | 10.0 | 9.2 | 3/45000 |
| Example 2 | 0.020 | 1.15 | 5.9 | 8.1 | 2/45000 |
| Example 3 | 0.024 | 1.15 | 3.8 | 7.9 | 2/45000 |
| Example 4 | 0.030 | 1.15 | 3.3 | 6.8 | 1/45000 |
| Example 5 | 0.034 | 1.15 | 2.7 | 6.4 | 1/45000 |
| Example 6 | 0.042 | 1.15 | 2.1 | 5.8 | 1/45000 |
| Example 7 | 0.045 | 1.15 | 1.7 | 5.1 | 0/45000 |
| Example 8 | 0.049 | 1.15 | 1.2 | 5.0 | 0/45000 |
| Example 9 | 0.054 | 1.15 | 0.7 | 5.1 | 0/45000 |

The gas generation during overdischarge was reduced in the batteries of Examples 1 to 9, which used negative electrode current collectors having an average crystal particle size of 0.015 mm or greater. A large amount of gas was generated during overdischarge in the batteries of Comparative Examples 1 and 2, which used negative electrode current collectors having an average crystal particle size of less than 0.015 mm.

The amount of gas generated during overdischarge was greatly reduced in the batteries of Examples 4 to 9, which used negative electrode current collectors having an average crystal particle size of 0.030 mm or greater. In particular, the amount of gas generated during overdischarge was significantly reduced in the batteries of Examples 7 to 9, which used negative electrode current collectors having an average crystal particle size of 0.045 mm or greater.

In the negative electrode current collectors used for the batteries of Examples 1 to 9, the incidence of defects during the assembly of sealing units was lower than that of the negative electrode current collectors used for the batteries of Comparative Examples 1 and 2. The reason seems to be as follows: the negative electrode current collectors used for the batteries of Examples 1 to 9 had a large average crystal particle size and hence are more flexible than the negative electrode current collectors used for the batteries of Comparative Examples 1 and 2. Therefore, even if the tip of the negative electrode current collectors was slightly bent when the negative electrode current collectors were press-fitted into the through-hole of the gasket, such a bend was easily corrected.

In the negative electrode current collectors having an average crystal particle size of 0.030 mm or greater, which were used for the batteries of Examples 4 to 9, the incidence of defects was greatly lowered. In particular, no defect occurred in the negative electrode current collectors having an average crystal particle size of 0.045 mm or greater, which were used for the batteries of Examples 7 to 9.

<<Examples 10 to 15>>

Batteries were produced in the same manner as in Example 1 except that the body of the negative electrode current collectors had a different diameter. The amount of gas generated during overdischarge was measured in the same manner as described above.

The evaluation results are shown in Table 2.

[Table 2]

|  | Current collector | | Amount of gas generated during overdischarge (ml) |
| --- | --- | --- | --- |
|  | Average crystal particle size (mm) | Body diameter (mm) | |
| Example 10 | 0.020 | 0.95 | 7.4 |
| Example 11 | 0.020 | 1.05 | 7.7 |
| Example 2 | 0.020 | 1.15 | 8.1 |
| Example 12 | 0.020 | 1.25 | 8.3 |
| Example 13 | 0.020 | 1.35 | 8.4 |
| Example 14 | 0.020 | 1.45 | 8.8 |
| Example 15 | 0.020 | 1.55 | 9.0 |

The amount of gas generated during overdischarge was reduced in the batteries using the negative electrode current collectors having a smaller body diameter since the area of contact with the gelled negative electrode (electrolyte) was reduced. In particular, the amount of gas generated during overdischarge was significantly reduced in the batteries of Examples 2 and 10 to 13, which used negative electrode current collectors having a body diameter of 0.95 to 1.35 mm.

<<Examples 16 to 20>>

Batteries were produced in the same manner as in Example 1 except that zinc alloys having the compositions shown in Table 3 were used as the negative electrode active material. The amount of gas generated during overdischarge was measured in the same manner as described above.

In addition, discharge test A under the following conditions was performed.

Each battery was discharged at a load of 3.9 Ω for 5 minutes in a 20°C environment. This discharge was performed once a day. The above-described discharge was repeated until the closed-circuit voltage of the battery reached 0.9 V. Then, the total discharge time until the closed-circuit voltage of the battery reached 0.9 V was determined. The discharge time was expressed as an index relative to the discharge time of Examples 2 of 100. The discharge performance was regarded as favorable if the discharge performance index was 80 or greater.

The evaluation results are shown in Table 3.

[Table 3]

|  | Current collector | | Amount of elements contained in zinc alloy | | | Amount of gas generated during overdischarge (ml) | Discharge performance index in discharge testA |
| --- | --- | --- | --- | --- | --- | --- | --- |
|  | Average crystal particle size (mm) | Body diameter (mm) | Al (ppm) | Bi (ppm) | In (ppm) | | |
| Example 2 | 0.020 | 1.15 | 50 | 150 | 200 | 8.1 | 100 |
| Example 16 | 0.020 | 1.15 | 100 | 150 | 200 | 6.9 | 99 |
| Example 17 | 0.020 | 1.15 | 150 | 150 | 200 | 6.1 | 94 |
| Example 18 | 0.020 | 1.15 | 250 | 150 | 200 | 5.3 | 89 |

(continued)

| | Current collector | | Amount of elements contained in zinc alloy | | | Amount of gas generated during overdischarge (ml) | Discharge performance index in discharge testA |
|---|---|---|---|---|---|---|---|
| | Average crystal particle size (mm) | Body diameter (mm) | Al (ppm) | Bi (ppm) | In (ppm) | | |
| Example 19 | 0.020 | 1.15 | 500 | 150 | 200 | 4.8 | 80 |
| Example 20 | 0.020 | 1.15 | 750 | 150 | 200 | 4.2 | 62 |

All of the batteries showed a decrease in the amount of gas generated during overdischarge. In particular, the batteries of Examples 17 to 19, in which the Al content of the zinc alloy was 150 to 500 ppm, showed a significant decrease in the amount of gas generated during overdischarge and also exhibited favorable discharge performance.

<<Examples 21 to 25>>>

The ratio of the negative electrode capacity to the positive electrode capacity (Cn/Cp) was varied. Specifically, as shown in Table 4, while the amount of manganese dioxide contained in the positive electrode mixture was kept constant, the amount of the zinc alloy contained in the gelled negative electrode was varied. Otherwise, batteries were produced in the same manner as in Example 1. The amount of gas generated during overdischarge was measured in the same manner as described above.

Additionally, discharge test B under the following conditions was performed.

Each battery was continuously discharged at a load of 10 Ω in a 20°C environment until the closed-circuit voltage of the battery reached 0.9 V, and the discharge time was determined. The discharge time was expressed as an index relative to the discharge time of Examples 2 of 100. The discharge performance was regarded as favorable if the discharge performance index was 80 or greater.

The evaluation results are shown in Table 4.

[Table 4]

| | Electric capacity of positive electrode (Ah) | Amount of gelled negative electrode (g) | Amount of zinc alloy (g) | Electric capacity of negative electrode (Ah) | Cn/Cp | Amount of gas generated during overdischarge (ml) | Discharge performance index in discharge test B |
|---|---|---|---|---|---|---|---|
| Example 2 | *2.741* | *6.00* | *3.82* | *3.134* | *1.14* | *8.1* | *100* |
| Example 21 | 2.741 | 5.75 | 3.66 | 3.004 | 1.10 | 7.5 | 97 |
| Example 22 | 2.741 | 5.50 | 3.50 | 2.873 | 1.05 | 7.1 | 93 |
| Example 23 | 2.741 | 5.25 | 3.34 | 2.743 | 1.00 | 6.6 | 88 |
| Example 24 | 2.741 | 5.00 | 3.19 | 2.612 | 0.95 | 5.4 | 82 |
| Example 25 | 2.741 | 4.75 | 3.03 | 2.481 | 0.91 | 5.1 | 72 |

All of the batteries showed a decrease in the amount of gas generated during overdischarge. In particular, the batteries of Examples 21 to 24, in which Cn/Cp was 0.95 to 1.10, showed a significant decrease in the amount of gas generated during overdischarge and also exhibited favorable discharge performance.

An alkaline dry battery according to the invention includes a hollow cylindrical positive electrode mixture including a positive electrode active material; a gelled negative electrode filled into the hollow of the positive electrode mixture and including a negative electrode active material; a separator disposed between the positive electrode mixture and the gelled negative electrode; a negative electrode current collector inserted into the gelled negative electrode; a negative electrode terminal plate electrically connected to the negative electrode current collector; and an electrolyte. The negative electrode current collector includes brass having an average crystal particle size in the range of 0.015 mm to 0.054 mm. The brass has a zinc content of 30 to 40 wt%.

**Claims**

1. An alkaline dry battery comprising:

    a hollow cylindrical positive electrode mixture including a positive electrode active material;
    a gelled negative electrode filled into the hollow of said positive electrode mixture and including a negative electrode active material;
    a separator disposed between said positive electrode mixture and said gelled negative electrode;
    a negative electrode current collector comprising brass having a zinc content of 30 to 40 wt% and inserted into said gelled negative electrode;
    a negative electrode terminal plate electrically connected to said negative electrode current collector; and
    an electrolyte, **characterised in that** said negative electrode current collector comprises brass having an average crystal particle size in the range of 0.015 mm to 0.054 mm.

2. The alkaline dry battery in accordance with claim 1, wherein said brass has an average crystal particle size of 0.030 mm or greater and 0.054 mm 20 or less.

3. The alkaline dry battery in accordance with claim 1, wherein said brass has an average crystal particle size of 0.045 mm or greater and 0.054 mm or less.

4. The alkaline dry battery in accordance with claim 1, wherein said negative electrode current collector has a nail shape, and has a substantially cylindrical body inserted into said gelled negative electrode and a head provided at one end of said body,

    said head is welded to said negative electrode terminal plate, and
    said body has a diameter of 0.95 to 1.35 mm.

5. The alkaline dry battery in accordance with claim 1, wherein said positive electrode active material comprises at least one of manganese dioxide and nickel oxyhydroxide.

6. The alkaline dry battery in accordance with claim 1, wherein said negative electrode active material comprises zinc or a zinc alloy.

7. The alkaline dry battery in accordance with claim 6, wherein said zinc alloy contains 150 to 500 ppm of Al.

8. The alkaline dry battery in accordance with claim 1, wherein the ratio of capacity Cn of said gelled negative electrode to capacity Cp of said positive electrode mixture: Cn/Cp is 0.95 to 1.10.

9. A method for producing an alkaline dry battery comprising a hollow cylindrical positive electrode mixture including a positive electrode active material; a gelled negative electrode filled into the hollow of said positive electrode mixture and including a negative electrode active material; a separator disposed between said positive electrode mixture and said gelled negative electrode; a negative electrode current collector inserted into said gelled negative electrode; a negative electrode terminal plate electrically connected to said negative electrode current collector; and an electrolyte, said method comprising the steps of:

    (1) providing a nail-shaped molded article comprising brass;
    (2) heating said molded article to 300 to 400°C; and
    (3) cooling, after said step (2), said molded article at a rate of 10°C/sec or less to obtain a negative electrode current collector comprising said brass having an average crystal particle size of 0.015 mm or greater, wherein said brass has a zinc content of 30 to 40 wt%.

**Patentansprüche**

1. Alkalische Trockenbatterie, die umfasst:

   eine hohle zylindrische Positivelektrodenmischung, die ein Positivelektrodenaktivmaterial beinhaltet;
   eine gegelte Negativelektrode, die in den Hohlraum der Positivelektrodenmischung eingefüllt ist und ein Negativelektrodenaktivmaterial beinhaltet;
   einen zwischen der Positivelektrodenmischung und der gegelten Negativelektrode angeordneten Separator;
   einen Negativelektrodenstromabnehmer, der ein Messing mit einem Zinkgehalt von 30 bis 40 Gewichts-% umfasst und in die gegelte Negativelektrode eingeführt ist;
   eine Negativelektrodenanschlussplatte, die elektrisch mit dem Negativelektrodenstromabnehmer verbunden ist; und
   einen Elektrolyten,
   **dadurch gekennzeichnet, dass** der Negativelektrodenstromabnehmer ein Messing mit einer durchschnittlichen Kristallteilchengröße im Bereich von 0,015 mm bis 0,054 mm aufweist.

2. Alkalische Trockenbatterie nach Anspruch 1, wobei das Messing eine durchschnittliche Kristallteilchengröße von 0,030 mm oder größer und 0,054 mm oder weniger aufweist.

3. Alkalische Trockenbatterie nach Anspruch 1, wobei das Messing eine durchschnittliche Kristallteilchengröße von 0,045 mm oder größer und 0,054 mm oder weniger aufweist.

4. Alkalische Trockenbatterie nach Anspruch 1, wobei der Negativelektrodenstromabnehmer eine Nagelform aufweist und einen im Wesentlichen zylindrischen Körper aufweist, der in die gegelte Negativelektrode eingeführt ist, und einen Kopf aufweist, der an einem Ende des Körpers vorgesehen ist,

   der Kopf an die Negativelektrodenanschlussplatte geschweißt ist, und
   der Körper einen Durchmesser von 0,95 bis 1,35 mm aufweist.

5. Alkalische Trockenbatterie nach Anspruch 1, wobei das Positivelektrodenaktivmaterial zumindest eines aus Mangandioxid und Nickeloxyhydrid umfasst.

6. Alkalische Trockenbatterie nach Anspruch 1, wobei das Negativelektrodenaktivmaterial Zink oder eine Zinklegierung umfasst.

7. Alkalische Trockenbatterie nach Anspruch 6, wobei die Zinklegierung 150 bis 500 ppm Al enthält.

8. Alkalische Trockenbatterie nach Anspruch 1, wobei das Verhältnis der Kapazität Cn der gegelten Negativelektrode zu der Kapazität Cp der Positivelektrodenmischung: Cn/Cp gleich 0,95 bis 1,10 ist.

9. Verfahren zum Herstellen einer alkalischen Trockenbatterie, umfassend eine hohle zylindrische Positivelektrodenmischung, die ein Positivelektrodenaktivmaterial beinhaltet; eine gegelte Negativelektrode, die in den Hohlraum der Positivelektrodenmischung eingefüllt ist und die ein Negativelektrodenaktivmaterial beinhaltet; einen zwischen der Positivelektrodenmischung und der gegelten Negativelektrode angeordneten Separator; einen Negativelektrodenstromabnehmer, der in die gegelte Negativelektrode eingeführt ist; eine Negativelektrodenanschlussplatte, die elektrisch mit dem Negativelektrodenstromabnehmer verbunden ist; und einen Elektrolyten, wobei das Verfahren die Schritte umfasst:

   (1) Bereitstellen eines nagelförmigen Formteils, das Messing umfasst;
   (2) Erwärmen des Formteils auf 300 bis 400 °C; und
   (3) Kühlen, nach dem Schritt (2), des Formteils mit einer Geschwindigkeit von 10°C/Sek oder weniger, um einen Negativelektrodenstromabnehmer zu erhalten, der das Messing mit einer durchschnittlichen Kristallteilchengröße von 0,015 mm oder größer umfasst, wobei das Messing einen Zinkgehalt von 30 bis 40 Gewichts-% aufweist.

## Revendications

**1.** Batterie sèche alcaline comprenant :

un mélange d'électrode positive cylindrique creux contenant un matériau actif d'électrode positive ;
une électrode négative gélifiée remplissant le creux dudit mélange d'électrode positive et comprenant un matériau actif d'électrode négative ;
un séparateur disposé entre ledit mélange d'électrode positive et ladite électrode négative gélifiée ;
un collecteur de courant d'électrode négative comprenant du laiton ayant une teneur en zinc de 30 à 40 % en poids et inséré dans ladite électrode négative gélifiée ;
une plaque de borne d'électrode négative connectée électriquement audit collecteur de courant d'électrode négative ; et
un électrolyte,
**caractérisée en ce que** ledit collecteur de courant d'électrode négative comprend du laiton ayant une granulométrie cristalline moyenne située dans la plage allant de 0,015 mm à 0,054 mm.

**2.** Batterie sèche alcaline selon la revendication 1, dans laquelle ledit laiton a une granulométrie cristalline moyenne de 0,030 mm ou plus et de 0,054 mm ou moins.

**3.** Batterie sèche alcaline selon la revendication 1, dans laquelle ledit laiton a une granulométrie cristalline moyenne de 0,045 mm ou plus et de 0,054 mm ou moins.

**4.** Batterie sèche alcaline selon la revendication 1, dans laquelle ledit collecteur de courant d'électrode négative a une forme de clou, et a un corps pratiquement cylindrique inséré dans ladite électrode négative gélifiée et une tête disposée à une extrémité dudit corps,
ladite tête est soudée à ladite plaque de borne d'électrode négative, et
ledit corps a un diamètre de 0,95 à 1,35 mm.

**5.** Batterie sèche alcaline selon la revendication 1, dans laquelle ledit matériau actif d'électrode positive comprend au moins l'un parmi le dioxyde de manganèse et l'oxyhydroxyde de nickel.

**6.** Batterie sèche alcaline selon la revendication 1, dans laquelle ledit matériau actif d'électrode négative comprend du zinc ou un alliage de zinc.

**7.** Batterie sèche alcaline selon la revendication 6, dans laquelle ledit alliage de zinc contient 150 à 500 ppm d'Al.

**8.** Batterie sèche alcaline selon la revendication 1, dans laquelle le rapport de la capacité Cn de ladite électrode négative gélifiée à la capacité Cp dudit mélange d'électrode positive Cn/Cp est de 0,95 à 1,10.

**9.** Procédé pour produire une batterie sèche alcaline comprenant un mélange d'électrode positive cylindrique creux contenant un matériau actif d'électrode positive ; une électrode négative gélifiée remplissant le creux dudit mélange d'électrode positive et comprenant un matériau actif d'électrode négative ; un séparateur disposé entre ledit mélange d'électrode positive et ladite électrode négative gélifiée ; un collecteur de courant d'électrode négative inséré dans ladite électrode négative gélifiée ; une plaque de borne d'électrode négative connectée électriquement audit collecteur de courant d'électrode négative ; et un électrolyte, ledit procédé comprenant les étapes suivantes :

(1) obtention d'un article moulé en forme de clou comprenant du laiton ;
(2) chauffage dudit article moulé à une température de 300 à 400°C ; et
(3) refroidissement, après ladite étape (2), dudit article moulé à une vitesse de 10°C/s ou moins pour que soit obtenu un collecteur de courant d'électrode négative comprenant ledit laiton ayant une granulométrie cristalline moyenne de 0,015 mm ou plus,
dans lequel ledit laiton a une teneur en zinc de 30 à 40 % en poids.

FIG. 1

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI513085 B
- JP 2006172908 A
- JP 5013085 A
- JP 63037568 A
- EP 1981105 A1
- WO 2006087388 A1